# EUROPÄISCHE PATENTSCHRIFT

(11) **EP 1 602 513 B1**
(45) Veröffentlichungstag und Bekanntmachung des Hinweises auf die Patenterteilung: **01.04.2009**
(21) Anmeldenummer: 04291367.3
(22) Anmeldetag: 01.06.2004
(51) Int. Cl.: B60H 1/00

(54) **Klimaanlage, insbesondere für ein Kraftfahrzeug**
Air conditioning device, particularly for an automotive vehicle
Dispositif de climatisation d'air, notamment pour véhicule automobile

(43) Veröffentlichungstag der Anmeldung: 07.12.2005
(73) Patentinhaber: Behr France Rouffach SAS, 68250 Rouffach (FR)
(72) Erfinder: Sehmann, Daniel, 67860 Rhinau (FR)
(74) Vertreter: Grauel, Andreas

(56) Entgegenhaltungen:
- EP-A- 0 212 306
- DE-A- 3 335 083
- DE-A- 10 104 907
- US-A- 4 593 852
- US-A1- 2003 230 103

## Beschreibung

Die Erfindung betrifft eine Klimaanlage, insbesondere für ein Kraftfahrzeug nach dem Oberbegriff des Patentanspruches 1, wie offenbart in der DE-A 3 335 083.

Klimaanlagen für Kraftfahrzeuge, wie sie z. B. durch die DE-A 101 04 907 bekannt wurden, weisen einen Verdampfer (Kühlwärmetauscher) und einen Heizkörper (Heizwärmetauscher) auf, die in Luftströmungsrichtung hintereinander in einem Gehäuse der Klimaanlage angeordnet sind. Die über ein Gebläse in die Klimaanlage geförderte Luft wird also zunächst im Verdampfer abgekühlt - dadurch entsteht Kaltluft - und anschließend im Heizkörper erwärmt bzw. wiedererwärmt ― dadurch entsteht Warmluft. Zur Erreichung der gewünschten Lufttemperatur ist der Heizkörper entweder "wasserseitig" oder "luftseitig" geregelt. Bei wasserseitiger Regelung strömt die gesamte Kaltluft durch den Heizkörper, während bei luftseitiger Luftregelung ein Teil der Kaltluft in einem Bypass- oder Kaltluftkanal den Heizkörper umströmt. In Strömungsrichtung hinter dem Heizkörper werden dann Warmluft und Kaltluft in einem Mischraum zusammengeführt und zur Erzielung der Solltemperatur gemischt. Bei manchen Klimaanlagen ist der Bypass- oder Kaltluftkanal außen um den Heizkörper herumgeführt, d. h. er verläuft zwischen Heizkörper und Gehäusewand des Klimagerätes. Dadurch entsteht ein längerer Weg, der mit einem entsprechenden Druckverlust für die Kaltluftströmung behaftet ist. Darüber hinaus kann sich die Kaltluft auf diesem Weg durch den Bypasskanal auch - durch Aufnahme von Wärme aus der Umgebung -wiedererwärmen, sodass im Mischraum bzw. im Fahrgastraum des Kraftfahrzeuges nicht die volle Kälteleistung zur Verfügung steht.

Es ist Aufgabe der vorliegenden Erfindung, eine Klimaanlage der eingangs genannten Art insbesondere hinsichtlich ihrer Kälteleistung zu verbessern.

Diese Aufgabe wird durch die Merkmale des Patentanspruches 1 gelöst. Erfindungsgemäß ist ein zweiter Kaltluftkanal vorgesehen, der durch eine zweite Mischklappe bezüglich des Kaltluftdurchsatzes regelbar ist. Die erfindungsgemäße Klimaanlage weist somit zwei jeweils durch eine eigene Mischklappe regelbare Kaltluftkanäle auf. Damit wird der Vorteil eines geringeren Druckverlustes und einer erhöhten Kälteleistung erreicht. Dem ersten Kaltluftstrom kann erfindungsgemäß - bei gesperrtem Heizkörper - der zweite Kaltluftstrom, der einen geringeren Druckabfall aufweist, zugemischt werden - damit kann die Lufttemperatur abgesenkt werden.

Ein Ausführungsbeispiel der Erfindung ist in der Zeichnung dargestellt und wird im Folgenden näher beschrieben. Es zeigen
- Fig. 1: eine erfindungsgemäße Klimaanlage,
- Fig. 2: die Klimaanlage gemäß Fig. 1 mit einer Klappenstellung "100 % warm",
- Fig. 3: die Klimaanlage gemäß Fig. 1 mit einer Klappenstellung "100 % kalt" und
- Fig. 4: die Klimaanlage gemäß Fig. 1 mit einer Klappenstellung "maximal kalt".

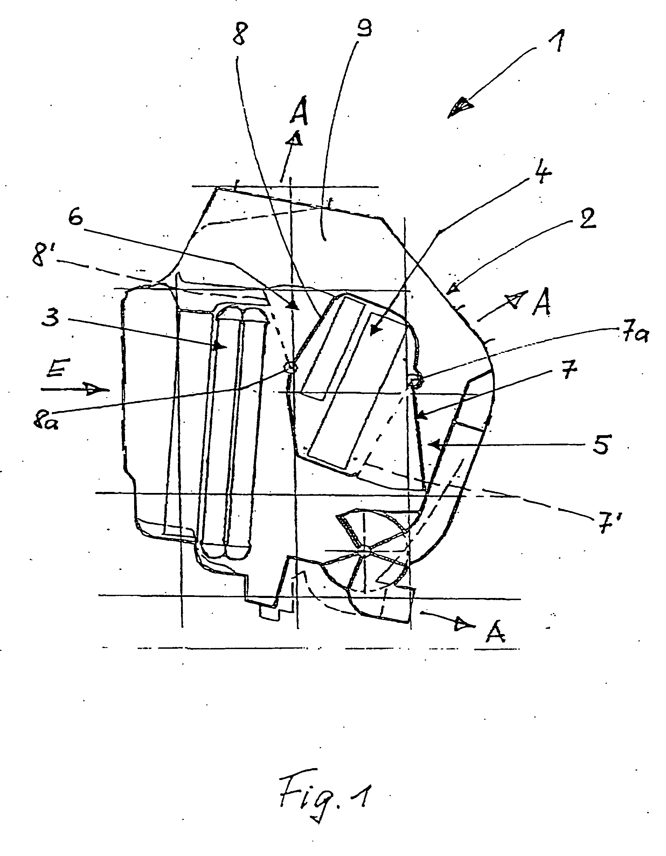

**Fig. 1** zeigt eine erfindungsgemäße Klimaanlage 1 mit einem Gehäuse 2, in welchem ein Verdampfer 3 und ein Heizkörper 4 in Luftströmungsrichtung hintereinander angeordnet sind. Zwischen dem Heizkörper 4 und dem Gehäuse 2 ist ein erster Kaltluftkanal 5 und zwischen dem Heizkörper 4 und dem Verdampfer 3 ein zweiter Kaltluftkanal 6 vorgesehen. Im Bereich des ersten Kaltluftkanals 5 ist eine erste Mischklappe 7 um eine Schwenkachse 7a schwenkbar angeordnet. Die Klappe 7 nimmt in der zeichnerischen Darstellung eine erste Extremlage 7 (durchgezogene Linie) ein, in welcher der Kaltluftkanal 5 geschlossen und der Luftdurchtritt durch den Heizkörper 4 freigegeben ist. Die zweite Extremlage 7' ist gestrichelt dargestellt: in dieser Position ist der erste Kaltluftkanal 5 voll geöffnet und der Heizkörper 4 für den Luftdurchtritt gesperrt. Im Bereich des zweiten Kaltluftkanals 6 ist eine zweite Mischklappe 8, schwenkbar um eine stromaufwärts gelegene Schwenkachse 8a, angeordnet. In der in der Zeichnung dargestellten ersten Extremlage mit durchgezogener Linie gibt die Klappe 8 den zweiten Kaltluftkanal 6 frei und sperrt gleichzeitig den Luftdurchtritt von der Seite des Heizkörpers 4. In einer zweiten gestrichelt dargestellten Extremlage 8' ist der Kaltluftkanal 6 gesperrt, der Luftaustritt von der Seite des Heizkörpers 4 dagegen geöffnet. In der Zeichnung oberhalb des Verdampfers 3 und des Heizkörpers 4 ist ein Mischraum 9 angeordnet, in welchen sowohl der erste und der zweite Kaltluftkanal 5, 6 als auch ein vom Heizkörper 4 kommender Warmluftstrom münden. Im Mischraum 9 werden also die Luftströme unterschiedlicher Temperatur gemischt, um die gewünschte Solltemperatur zu erzielen. Vom Mischraum 9 wird die Luft über nicht dargestellte Kanäle in bekannter Weise einem nicht dargestellten Fahrgastraum des Kraftfahrzeuges zugeführt. Die Luft tritt in Strömungsrichtung vor dem Verdampfer 3, angedeutet durch einen Pfeil E, in das Gehäuse 2 der Klimaanlage 1 ein und verlässt die Klimaanlage an verschiedenen Stellen, welche durch Pfeile A gekennzeichnet sind.

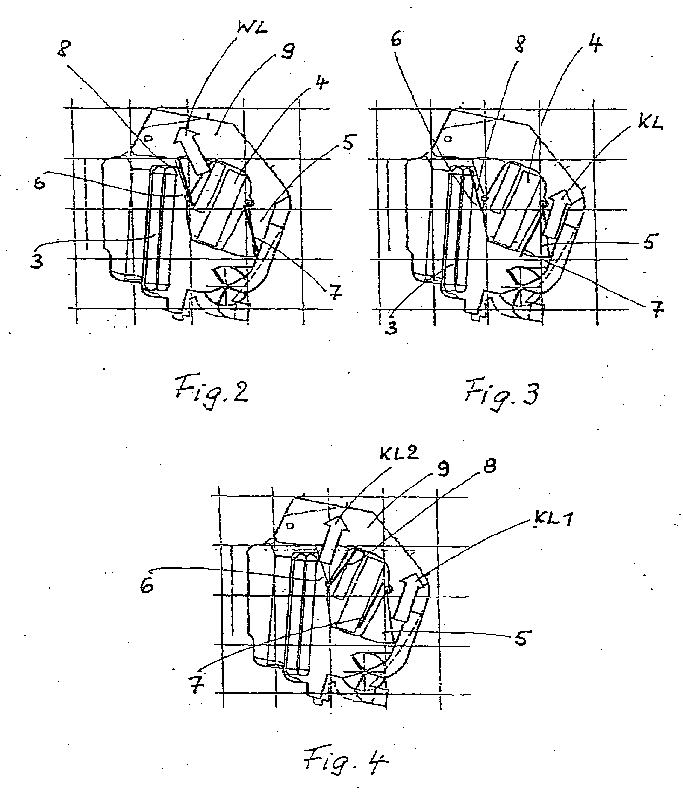

**Fig. 2** zeigt die Klimaanlage gemäß Fig. 1 in einer Klappenposition, welche mit "100 % warm" gekennzeichnet sein soll. Bei dieser Stellung sind beide Kaltluftkanäle 5, 6 durch die Mischklappen 7, 8 verschlossen (Klappenposition 7, 8 fett), und der Luftdurchtritt durch den Heizkörper 4 ist beiderseits voll geöffnet. Die gesamte aus dem Verdampfer 3 austretende Luft wird somit durch den Heizkörper 4 gelenkt und dort maximal erwärmt. Die verschiedenen Temperaturstufen werden über den Durchsatz eines Kühlmittels durch den Heizkörper 4 über ein nicht dargestelltes Heizkörperventil geregelt (so genannte wasserseitige Regelung). Der aus dem Heizkörper 4 austretende Warmluftstrom ist durch einen Pfeil WL gekennzeichnet.

**Fig. 3** zeigt eine Klappenstellung, bei welcher der Kaltluftkanal 5 voll geöffnet und der Heizkörper 4 für den Luftdurchtritt gesperrt ist. Der zweite Bypasskanal 6 ist durch die zweite Mischklappe 8 gesperrt. Diese Klappenposition (Klappenstellungen 7, 8 fett) wird als "100 % kalt" bezeichnet, der Kaltluftstrom ist durch einen Pfeil KL gekennzeichnet.

**Fig. 4** zeigt eine weitere Klappenstellung (Klappen 7, 8 fett), die als "maximal kalt" bezeichnet wird. Bei dieser Klappenstellung sind beide Kaltluftkanäle 5, 6 voll geöffnet, und der Strömungsweg der Luft durch den Heizkörper 4 ist gesperrt. Die aus dem Verdampfer 3 austretende, maximal abgekühlte Luft strömt nunmehr durch beide Kaltluftkanäle 5, 6 um den Heizkörper 4 herum in den Mischraum 9, wo sich beide Kaltluftströme, dargestellt durch die Pfeile KL1, KL2, treffen. Im Mischraum findet also eine Vermischung der beiden Kaltluftströme KL1, KL2 statt, sodass sich auch eine vergleichmäßigte Lufttemperatur ergibt. Die Mengenströme von KL1, KL2 stellen sich nach dem jeweiligen Druckverlust in den beiden Kaltluftkanälen 5, 6 ein. Aus der Darstellung ist ersichtlich, dass bei der Klappenposition "maximal kalt" eine höhere Kälteleistung bzw. eine niedrigere Lufttemperatur erzielbar ist als bei der Klappenposition "100 % kalt" in Fig. 3. Insofern wird durch den zusätzlichen zweiten Kaltluftkanal 6 die Kälteleistung der Klimaanlage 1 erhöht und der Druckabfall für die Luftströmung infolge eines vergrößerten Strömungsquerschnittes für die Kaltluft erniedrigt.

Die Ansteuerung der beiden Klappenpositionen gemäß Fig. 3 und Fig. 4, also "100 % kalt" und "maximal kalt" kann zweckmäßigerweise nacheinander erfolgen, indem die beiden Mischklappen 7, 8 - was nicht dargestellt ist - miteinander gekoppelt werden. Man wählt zunächst die Position "100 % kalt" an und anschließend, z. B. mit einem nicht dargestellten Drehknopf die nächste Position "maximal kalt". Durch die Kopplung beider Klappen 7, 8 wird automatisch von der Position gemäß Fig. 3 auf die Position gemäß Fig. 4 umgesteuert, womit eine noch stärkere Abkühlung des Fahrgastraumes erreichbar ist.

## Patentansprüche

1. Klimaanlage, insbesondere für ein Kraftfahrzeug mit in einem Gehäuse (2) angeordnetem Mischraum (9), Verdampfer (3), Heizkörper (4), Kaltluftkanal (5) und einer ersten Mischklappe (7) zur Regelung einer den Heizkörper (4) und/oder den Kaltluftkanal (5) durchströmenden Luftmenge, wobei die Mischklappe (7) eine erste Extremlage einnimmt, in welcher der Kaltluftkanal (5) geschlossen und der Luftdurchtritt durch den Heizkörper (4) freigegeben ist und in einer zweiten Extremlage der erste Kaltluftkanal (5) voll geöffnet und der Heizkörper (4) für den Luftdurchtritt gesperrt ist und im Bereich eines zweiten Kaltluftkanals (6) eine zweite Mischklappe (8) vorgesehen ist, wobei die zweite Mischklappe (8) in einer ersten Extremlage den zweiten Kaltluftkanal (6) frei gibt und gleichzeitig den Luftdurchtritt von der Seite des Heizkörpers (4) sperrt und in einer zweiten Extremlage (8') der Kaltluftkanal 6 gesperrt ist, und der Luftaustritt von der Seite des Heizkörpers 4 dagegen geöffnet ist, wobei in den Mischraum (9) sowohl der erste und der zweite Kaltluftkanal (5,6) als auch ein vom Heizkörper (4) kommender Warmluftstrom münden, **dadurch gekennzeichnet, dass** der Mischraum (9) oberhalb des Verdampfers 3 und des Heizkörpers 4 angeordnet ist, wobei der erste Kaltluftkanal (5) zwischen dem Heizkörper (4) und dem Gehäuse (2) und der zweite Kaltluftkanal (6) zwischen dem Heizkörper (4) und dem Verdampfer (3) angeordnet sind.

## Claims

1. Air conditioning system, in particular for a motor vehicle, with a housing (2) accommodating a blend chamber (9), an evaporator (3), a heater (4), a cold air duct (5) and a first blend air door (7) for the control of an air quantity flowing through the heater (4) and/or the cold air duct (5), wherein the blend air door (7) adopts a first extreme position in which the cold air duct (5) is closed and the air flow through the heater (4) is enabled, and wherein in a second extreme position the first cold air duct (5) is fully open and the air flow through the heater (4) is blocked, a second blend air door (8) being provided in the region of a second cold air duct (6), wherein the second blend air door (8) clears the second cold air duct (6) in a first extreme position while blocking the air flow from the side of the heater (4), and wherein the cold air duct (6) is blocked in a second extreme position (8') while the air flow from the side of the heater (4) is enabled, both the first and second cold air ducts (5, 6) and a warm air flow from the heater (4) terminating at the blend chamber (9), **characterised in that** the blend chamber (9) is located above the evaporator (3) and the heater (4), **in that** the first cold air duct (5) is located between the heater (4) and the housing (2), and **in that** the second cold air duct (6) is located between the heater (4) and the evaporator (3).

## Revendications

1. Système de climatisation, en particulier pour un véhicule automobile, comprenant, disposés dans un carter (2), un espace de mélange (9), un évaporateur (3), un radiateur (4), un conduit d'air froid (5) et un premier volet mélangeur (7) servant à la régulation d'une quantité d'air traversant le radiateur (4) et / ou le conduit d'air froid (5), où le volet mélangeur (7) prend une première position extrême dans laquelle le conduit d'air froid (5) est fermé et le passage d'air, à travers le radiateur (4), ouvert, et, dans une deuxième position extrême, le premier conduit d'air froid (5) est complètement ouvert et le radiateur (4) fermé pour le passage d'air et, dans la zone d'un deuxième conduit d'air froid (6), il est prévu un deuxième volet mélangeur (8), où le deuxième volet mélangeur (8), dans une première position extrême, ouvre le deuxième conduit d'air froid (6) et, en même temps, ferme le passage d'air par le côté du radiateur (4) et, dans une deuxième position extrême (8'), le deuxième conduit d'air froid (6) est fermé, et la sortie d'air, par le côté du radiateur (4), par contre est ouverte, où aussi bien le premier que le deuxième conduit d'air froid (5, 6) ainsi qu'un flux d'air chaud provenant du radiateur (4) débouchent dans l'espace de mélange (9),
**caractérisé en ce que** l'espace de mélange (9) est disposé au-dessus de l'évaporateur (3) et du radiateur (4), où le premier conduit d'air froid (5) est disposé entre le radiateur (4) et le carter (2), le deuxième conduit d'air froid (6) étant disposé entre le radiateur (4) et l'évaporateur (3).
